# EUROPEAN PATENT APPLICATION

(11) **EP 2 236 060 A1**
(43) Date of publication of application: **06.10.2010**
(21) Application number: 09155878.3
(22) Date of filing: 23.03.2009
(51) Int. Cl.: A47J 31/36

(54) **A method for making an iced beverage and a package containing a liquid**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A method for making an iced beverage comprising water and at least one ingredient. Water is heated and an ingredient of the beverage is extracted or mixed with the heated water in order to produce a liquid component of the beverage. The liquid component is mixed with a frozen component (11) of the beverage comprising water and at least one ingredient of the beverage.

## Description

### FIELD OF THE INVENTION

The invention is related to a method for making an iced beverage comprising water and at least one ingredient, whereby water is heated and an ingredient of the beverage is extracted or mixed with the heated water in order to produce a liquid component of the beverage, which liquid component is mixed with a frozen component of the beverage in order to cool the beverage.

For the purpose of this patent specification, an iced beverage is a cold beverage, in general having a temperature of less than 10 °C. The beverage is cooled down by means of said frozen component, being pieces of ice (frozen water), which pieces can be made by shaving or crushing one or more blocks of ice. The beverage may contain pieces of ice, whereby the temperature of the beverage is about 0 °C, but the pieces of ice may also be completely molten during the cooling process of the beverage. Then, the beverage may have a temperature above 0 °C.

### BACKGROUND OF THE INVENTION

A method for making an iced beverage as described above is disclosed in WO-A-2007/072374. In particular, this publication describes a device and a method for making a single serve portion of iced coffee. Thereby, coffee is brewed by means of an extracting process, whereby heated water is pressed through a pad containing ground coffee. Furthermore, frozen water (ice) is cut into pieces of ice by means of a cutting device, and the pieces of ice are added to the freshly brewed coffee in order to cool the coffee down to a temperature whereby the coffee is regarded as being iced coffee.

In general, a disadvantage of adding ice (frozen water) to the liquid component of the beverage is the dilution of the beverage when the ice melts into water during the cooling process. As is described in WO-A-2007/072374, about 60 g ice is needed for cooling down 60 g of freshly brewed coffee having a temperature of about 75 °C to a drinking temperature of below 10 °C. The publication proposes to provide the freshly brewed coffee in a concentrated form in order to reduce the degree of dilution of the finished beverage.

### SUMMARY OF THE INVENTION

An object of the invention is a method for making an iced beverage, whereby a warm liquid component of the beverage is mixed with a frozen component, and whereby the degree of dilution of the beverage caused by the melted frozen component is reduced.

Another object of the invention is a method for making an iced beverage, whereby a warm liquid component of the beverage is mixed with a frozen component, and whereby one or more additional ingredients are added to the beverage in an easy way during the mixing process of the two components.

In order to accomplish with one or both these objects, the frozen component of the beverage comprises at least one ingredient of the beverage. Thereby, the frozen component is frozen water containing said at least one ingredient of the beverage. The ingredient will be automatically mixed with the beverage when the frozen component is melting, and there is no need to add the ingredient separately. Furthermore, with the same warm liquid component, different beverages can be made by making use of different frozen components, i.e. frozen water with the desired ingredient or ingredients.

In a preferred embodiment, the beverage to be made is an iced coffee-based drink, whereby said liquid component comprises coffee. A coffee-based drink is any beverage containing coffee. It can be cappuccino or vanilla cappuccino (flavoured cappuccino) or any other coffee drink. In this specification, a coffee-based drink will be indicated as coffee.

In a preferred embodiment, said frozen component comprises coffee. When the liquid component as well as the frozen component comprises coffee, dilution of the finished iced coffee can be considerably reduced or even completely avoided. Although only a part of the coffee in the beverage is freshly made coffee, the taste of the finished coffee is like freshly made coffee.

Preferably, said liquid component of the beverage is made by extracting ground coffee with the heated water, whereby the frozen component is frozen coffee, for example made of powder coffee solved in water. Thereby, the finished beverage can have all the characteristics of freshly brewed iced coffee.

The ingredient in the frozen component can be a flavouring or sugar or any other substance that may be or has to be added to the beverage. In a preferred embodiment, said frozen component comprises a milk based ingredient. For example, in order to make iced coffee, the liquid component can be freshly brewed coffee and the frozen component may comprise coffee in order to avoid dilution of the beverage, and milk and/or sugar and/or a flavouring, so that the finished beverage is ready for drinking without adding further ingredients to the beverage. Of course, the frozen component may also contain such ingredient or ingredients without the presence of coffee. In that case it is preferred that relative strong coffee is made as liquid component of the beverage.

In a preferred embodiment, said frozen component is supplied as a portion of a liquid in a sealed package, whereupon said liquid is frozen in said sealed package, and whereupon the frozen liquid is crushed or shaved before it is mixed with the warm liquid component of the beverage. In order to make iced coffee the sealed package may contain coffee, or coffee and milk, or coffee and sugar, or coffee and milk and sugar, or any other combination of ingredients that can be mixed with the freshly brewed coffee in order to make the desired finished iced coffee.

The sealed packages containing coffee and the desired further ingredients may be bought by the consumer through a supermarket. Then, the consumer can freeze the sealed packages in a freezer whereupon the frozen block of ice is unpacked and inserted in an ice-chamber of the device for making the iced beverage, in case that device comprises means for crushing or shaving the ice into small pieces, like the apparatus for making an iced beverage as is described in WO-A-2007/072374.

The invention is also related to a sealed package containing a liquid for producing a frozen component for an iced beverage, which frozen component is to be mixed with a warm liquid component of the beverage, whereby the liquid in the sealed package comprises water and at least one ingredient of the beverage. Preferably, the destination of the contents of the package is mentioned on the package. In a preferred embodiment, the package contains between 40 g and 200 g of the liquid in order to produce one or two drinking portions of the beverage. Preferably, the liquid in the sealed package comprises coffee in a concentration substantially equal to a drinkable concentration of coffee. Thereby, dilution of the coffee, after the freshly brewed coffee is mixed with the frozen component can be completely avoided.

In a preferred embodiment, the sealed package has at least partly a rigid wall, so that the frozen liquid will have a predetermined shape. Thereby, the frozen component of the beverage can have a predetermined shape corresponding to the shape of the ice-chamber of an apparatus for making the iced beverage.

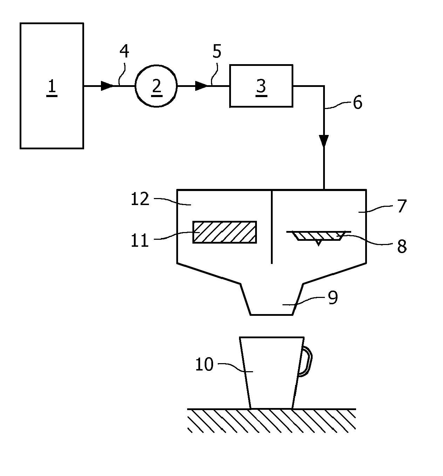

### BRIEF DESCRIPTION OF THE DRAWING

The invention will now be further elucidated by means of an example of a method for making a drinking portion of iced coffee, whereby reference is made to a schematic drawing showing components of an apparatus for making iced coffee. Only components that are relevant for the elucidation of the invention are shown in the drawing.

### DETAILED DESCRIPTION OF AN EMBODIMENT

The drawing shows a water container 1, a pump 2 and a heater 3. When the pump 2 is in operation, the water from the water container 1 is pumped through conduits 4 and 5 to the heater 3, where the water is heated. The heated water is guided through conduit 6 to a coffee brewing chamber 7. In the brewing chamber 7, the water is pressed through a coffee pad 8 containing ground coffee. Then the brewed coffee leaves the brewing chamber 7 through a spout 9 in order to arrive in a drinking cup 10. At the same time, a block of ice 11, being a frozen solution of coffee powder in water, is present in ice shaving chamber 12 and is shaved into slices of ice. After shaving, the slices of ice are falling down through spout 9 in the drinking cup 10.

In order to produce one drinking cup of coffee, 60 g water is heated and pressed through coffee pad 8 and a block 11 of 60 g ice is shaved. The result is a freshly made cup 10 of iced coffee.

Before the block of ice 11 is placed in the ice shaving chamber 12, it is frozen in a freezer. Thereby it was packed in a sealed package having at least partly a rigid wall, so that the block of ice 11 has a predetermined shape, which shape is required in order to fit in the ice shaving chamber 12.

Devices for brewing coffee by pressing heated water through a coffee pad 8 and devices for shaving a block of ice 11 are well known. The drawing shows a combination of such devices in one apparatus.

While the invention has been illustrated in the drawing and the foregoing description, such illustration and description are to be considered illustrative or exemplary and not restrictive; the invention is not limited to the disclosed embodiment. Any reference signs in the claims should not be construed as limiting the scope of the invention.

## Claims

1. A method for making an iced beverage comprising water and at least one ingredient, whereby water is heated and an ingredient of the beverage is extracted or mixed with the heated water in order to produce a liquid component of the beverage, which liquid component is mixed with a frozen component (11) of the beverage, **characterized in that** the frozen component (11) of the beverage comprises at least one ingredient of the beverage.

2. A method as claimed in claim 1, **characterized in that** the beverage is an iced coffee-based drink, whereby said liquid component comprises coffee.

3. A method as claimed in claim 2, **characterized in that** said frozen component (11) comprises coffee.

4. A method as claimed in claim 2 or 3, **characterized in that** said liquid component of the beverage is made by extracting ground coffee with the heated water, and **in that** the frozen component (11) is frozen coffee.

5. A method as claimed in any one of the preceding claims, **characterized in that** said frozen component (11) comprises a milk based ingredient.

6. A method as claimed in any one of the preceding claims, **characterized in that** said frozen component (11) is supplied as a portion of a liquid in a sealed package, whereupon said liquid is frozen in said sealed package, and whereupon the frozen liquid (11) is crushed or shaved before it is mixed with said liquid component of the beverage.

7. A sealed package containing a liquid for producing a frozen component (11) for an iced beverage, which frozen component (11) is to be mixed with a warm liquid component of the beverage, **characterized in that** the liquid comprises water and at least one ingredient of the beverage.

8. A sealed package as claimed in claim 7, **characterized in that** the package contains between 40 g and 200 g of the liquid.

9. A sealed package as claimed in claim 7 or 8, **characterized in that** the liquid comprises coffee in a concentration substantially equal to a drinkable concentration of coffee.

10. A sealed package as claimed in any one of claims 7-9, **characterized in that** the sealed package has at least partly a rigid wall, so that the frozen liquid will have a predetermined shape.
